# EUROPEAN PATENT APPLICATION

(11) **EP 1 449 423 A2**
(43) Date of publication of application: **25.08.2004**
(21) Application number: 04075142.2
(22) Date of filing: 23.01.2004
(51) Int. Cl.: A01D 25/04

(54) **Leek digger**

(30) Priority: 24.01.2003 BE 200300053
(71) Applicant: Baekelandt Metaalkonstruktie, 8760 Meulebeke (BE)
(72) Inventor: Baekelandt, Jan c/o Baekelandt Metaalkonstruktie, 8760 Meulebeke (BE)
(74) Representative: Quintelier, Claude

(57) **Abstract**

Leek digger comprising a conveyor element that is provided for conveying the leeks from a digging element (1), which digging element (1) is provided for lifting the leeks (2) out of the ground, to a collection bin (17), which conveyor element comprises a first segment (3) for moving the leeks (2) upwards for the purpose of lifting the leeks (2) over a top edge of the collection bin (17), the leeks (2) in the first segment (3) being disposed substantially in the vertical direction, which conveyor element comprises a second segment (9) connecting to the first segment (3) and provided in order to rotate the leeks from said vertical direction to a substantially horizontal direction and to move them further in said horizontal direction.

## Description

The invention relates to a leek digger, comprising a conveyor element that is provided for conveying the leeks from a digging element, which is provided for lifting the leeks out of the ground, to a collection bin, which conveyor element comprises a first segment for moving the leeks upwards for the purpose of lifting the leeks over a top edge of the collection bin, the leeks in the first segment being disposed substantially in the vertical direction.

Such a leek digger is generally known and is commonly used in agriculture. The digging element is generally in the form of a shovel that digs into the ground in order to lift the leeks out of the ground. The leeks dug out are lifted upwards in the vertical direction by the first segment of the conveyor element. The leeks lifted in this way are then picked up by a person and placed by hand in a collection bin.

A disadvantage of the known leek digger is, of course, the necessary presence of a person to place the leeks in the collection bin. This is labour-intensive and therefore expensive.

The object of the invention is to achieve a leek digger in the case of which the collection of the leeks is also carried out fully automatically.

To that end, a leek digger according to the invention is characterized in that the conveyor element comprises a second segment connecting to the first segment and provided in order to rotate the leeks from said vertical direction to a substantially horizontal direction and to move them further in said horizontal direction. The second segment thus makes it possible to tilt the leeks from a vertical to a horizontal direction and in this way take them in the horizontal direction into the collection bin. This means that the leeks are placed neatly in a horizontal position in the collection bin without the intervention of a person. The fact that the leeks are placed in the horizontal direction in the collection bin means that they are not damaged.

A first preferred embodiment of a leek digger according to the invention is characterized in that the conveyor element is provided with a third segment, which connects to the second segment and is provided in order to guide the leeks in a downward movement into the collection bin, while the leeks remain in the horizontal direction. This means that the leeks need only undergo a very short falling movement.

A second preferred embodiment of a leek digger according to the invention is characterized in that said second segment comprises two conveyor belts disposed next to each other and each mounted on a set of drive elements for driving each of the conveyor belts, the drive elements of the same set being turned virtually a quarter turn relative to each other. The use of conveyor belts provides a simple and reliable solution both for moving and for rotating the leek plants.

A third preferred embodiment of a leek digger according to the invention is characterized in that guide rollers are disposed between the drive elements of the same set, which guide rollers are spring-mounted and are provided in such a way that they press against the conveyor belt on that part of the section of the conveyor belt on which the leeks are situated. In this way a thorough grip of the leeks between the conveyor belts is obtained.

A fourth preferred embodiment of a leek digger according to the invention is characterized in that said collection bin is mounted on a conveyor mechanism that is provided in order to move the collection bin to and fro in a horizontal direction. The conveyor mechanism makes movement of the collection bin possible, so that an ordered and efficient filling of the collection bin can take place.

The invention will now be explained in greater detail with reference to the drawing, which illustrates diagrammatically an example of a leek digger according to the invention. In the drawing:
Figure 1 shows a side view of a leek digger according to the invention;
Figure 2 shows a front view of the same leek digger;
Figure 3 shows a top view of the same leek digger; and
Figure 4 shows a detail view of the frame in which the second segment is mounted.

In the drawing the same reference numeral is given to an identical or a similar element.

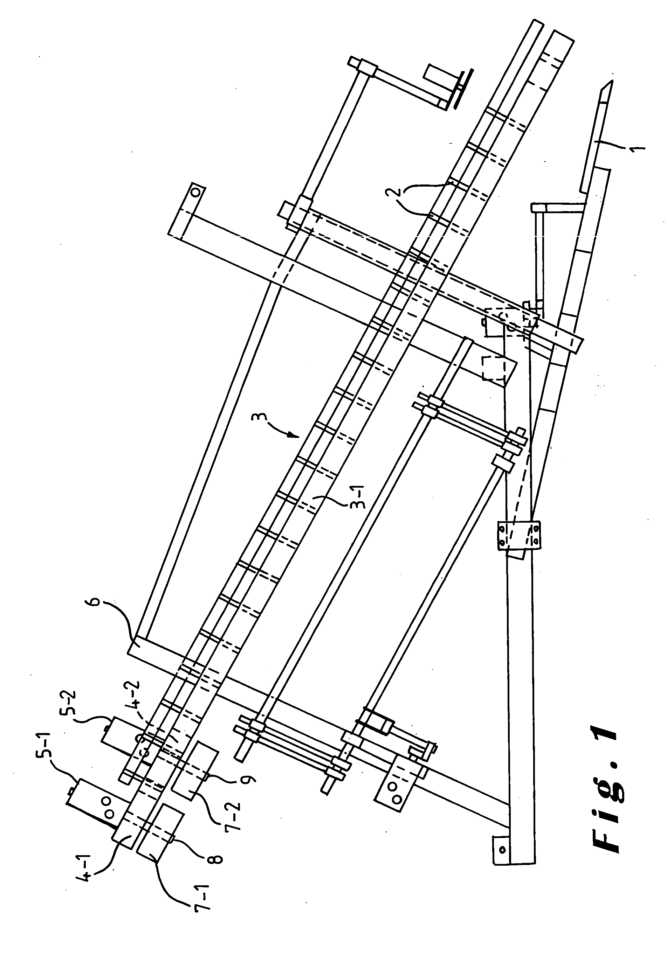

As shown in Figure 1, the leek digger comprises a digging element 1, for example in the form of a digging share for lifting the leeks 2 out of the ground. Since the leeks are in a vertical position in the ground, they are lifted vertically out of the ground and taken to a first segment 3 of a conveyor element. That first segment comprises a first conveyor belt 3-1 and a second conveyor belt 3-2, which conveyor belts are disposed next to each other. The first segment is provided in order to move the leeks, which extend substantially in the vertical direction, upwards from the ground.

The first conveyor belt 3-1 and second conveyor belt 3-2 are in each case mounted on a set of drive elements (4, 5) for driving each of the conveyor belts. These drive elements comprise motors 5-1 and 5-2, which drive a drive wheel 4-1 and 4-2 respectively. The first conveyor belt 3-1 is mounted on the first drive wheel 4-1, and the second conveyor belt 3-2 is mounted on the second drive wheel 4-2. The two drive wheels 4-1 and 4-2 are situated on the same end of the first segment, while further drive wheels (not shown in the figure) are disposed on the other end of that same segment . The motors 5-1 and 5-2 are preferably synchronized with each other in order to make the conveyor belts 3-1 and 3-2 operate in synchronism, since asynchronous movement of the conveyor belts could lead to damage to the leeks to be conveyed. The drive elements and the conveyor belts are mounted on a frame 6, which can be mounted on, for example, a tractor. The digging element 1 is also mounted on that frame.

Owing to the fact that the conveyor belts are disposed next to each other, the dug leeks can be accommodated between the conveyor belts 3-1 and 3-2 and in this way conveyed further. The first segment 3 of the conveyor element is disposed obliquely, so that the leeks are conveyed upwards from the ground.

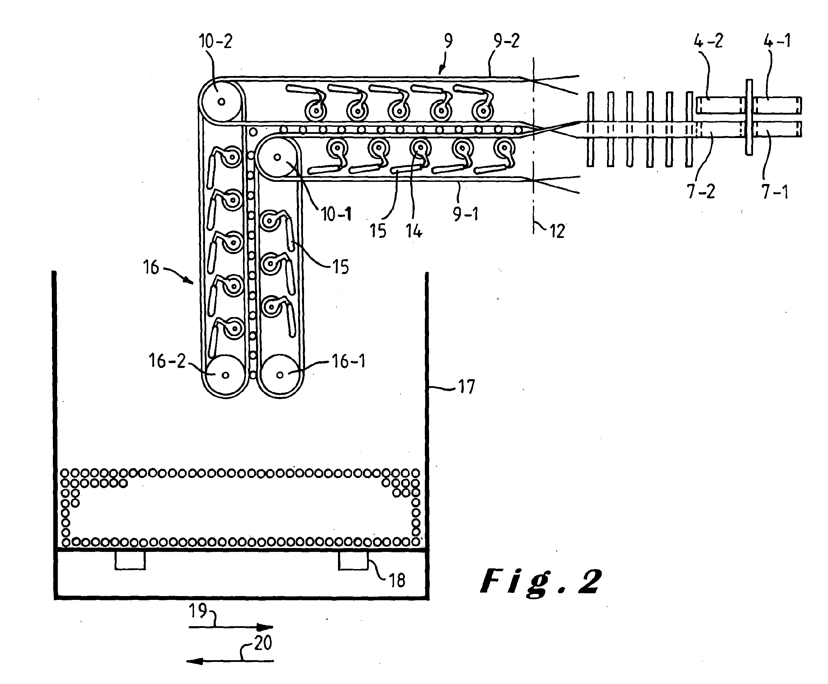

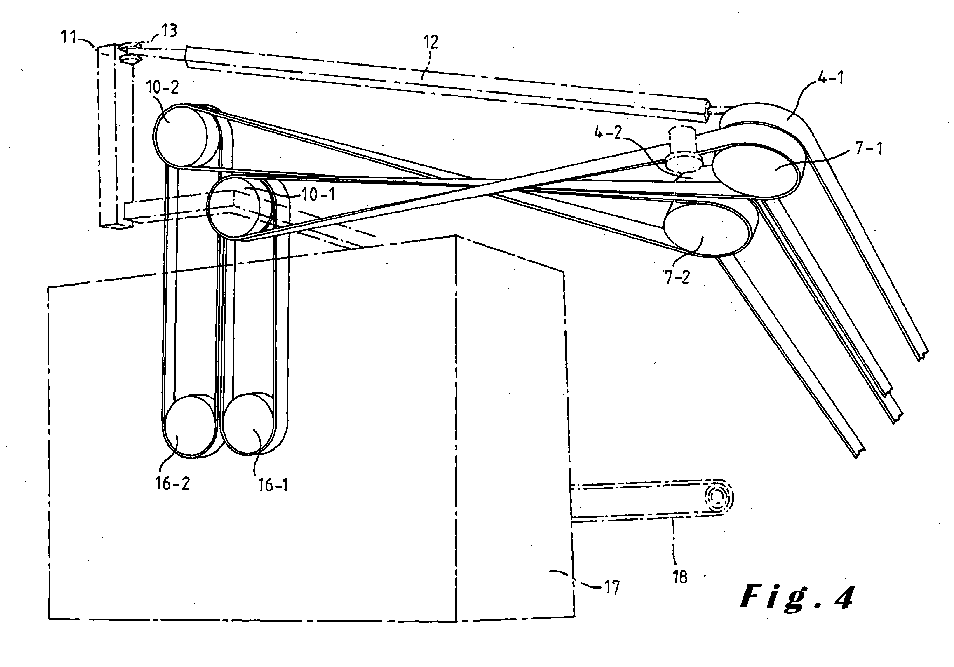

The motors 5-1 and 5-2 are preferably situated at a height of between 2 m and 2.5 m, in order to give sufficient height to a collection bin 10, as shown in Figures 2 and 4. These motors 5-1 and 5-2 drive a third drive wheel 7-1 and 7-2 respectively. In this case the first drive wheel (4-1) and the third drive wheel (7-1) are mounted on the same shaft 8 of the motor 5-1, while the second drive wheel (4-2) and the fourth drive wheel (7-2) are mounted on the same shaft 9 of the motor 5-2. Mounting the drive wheels on the same shaft ensures that they run in synchronism.

The third and fourth drive wheels form part of a second segment 9 of the conveyor element, which second segment connects to the first segment. The third and the fourth drive wheels respectively are fitted on the one end of the second segment that corresponds to the end of the first segment. A fifth and a sixth drive wheel 10-1 and 10-2 respectively are fitted on the other end of the second segment 9. The second segment further comprises two conveyor belts 9-1 and 9-2, which are disposed next to each other on the third - fifth and fourth - sixth drive wheels respectively. Owing to the fact that the conveyor belts of the second segment connect to those of the first segment, the leeks are conveyed further from the end of the first segment by way of the second segment.

The fifth drive wheel 10-1 and the sixth drive wheel 10-2 respectively are disposed in such a way that they are turned virtually a quarter turn relative to the third drive wheel 7-1 and the fourth drive wheel 7-2 respectively. This means that the third and fourth drive wheels are disposed, for example, substantially horizontally or through an angle of 10°, while the fifth and sixth drive wheels are disposed substantially vertically. This arrangement of the drive wheels means that the conveyor belts 9-1 and 9-2 in their movement from the third and fourth to the fifth and sixth drive wheel respectively turn through virtually a quarter turn without in the process losing their position disposed next to each other. The result of this turning movement is that the leeks 2 are turned from their vertical direction to a substantially horizontal direction while they are passing along the second segment. The turning of the conveyor belts 9-1 and 9-2 is illustrated in Figure 2 by the crossing at the level of the imaginary line 12.

Guide rollers 14 are disposed between the drive wheels 7 and 10 of a same set, which guide rollers 14 are spring-mounted, for example by means of the springs 15. The guide wheels and the springs in this way press against their respective conveyor belt on that part of the section of the conveyor belt on which the leeks 2 are situated. In this way it is ensured that the distance between the conveyor belts 9-1 and 9-2 is kept virtually constant, despite the fact that the conveyor belts are subjected to a turning movement. This construction ensures that the leeks are wedged neatly between the conveyor belts.

In order to guide this rotation of the conveyor belts better, the latter are preferably made T-shaped, in which case the leeks rest upon the top surface of the T. The vertical part of the T shape extends on the underside of the conveyor belt and engages in guide rollers 14 which are provided centrally with an opening in their guide surface, in such a way that the vertical part of the T shape runs into the opening. In this way the orientation of the conveyor belt is controlled by the interaction of a number of such guide rollers and the T-shaped conveyor belt.

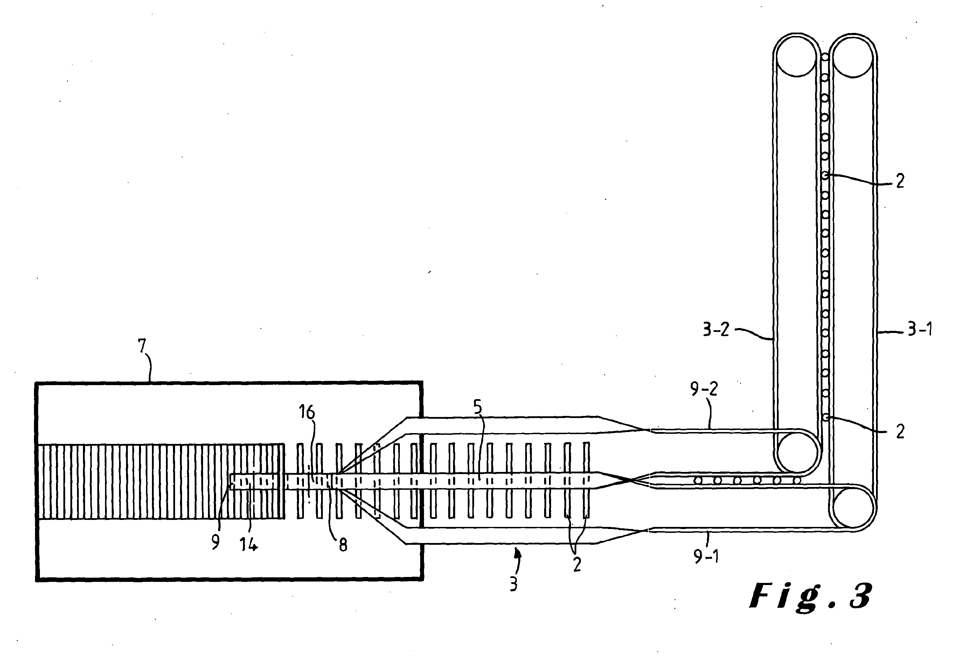

As shown in Figures 3 and 4, the second segment is mounted on a frame 11, which is provided with a connecting rod 12 which connects the frame 6 on which the first segment is mounted to the frame 11. The connecting rod 12 is preferably mounted so as to be slightly rotatable, for example by means of a rubber-metal element, about the shaft 13, in order to absorb torsion. The frame 11 is preferably such that it can be mounted behind a tractor, while the frame 6 is preferably mounted alongside the tractor.

The second segment is further provided with a shaking element (not shown) for shaking off the earth that may still be adhering to the leeks that have been dug up. Said shaking element is achieved by, for example, an eccentric which causes the conveyor belt to shake.

The second segment 9 of the conveyor element opens into a third segment 16, which is positioned at right angles to the second segment and causes a downward movement of the leeks, as illustrated in Figures 2 and 4. The third segment is likewise formed by two conveyor belts 16-1 and 16-2, which are disposed substantially parallel to each other and can be driven by drive wheels 10-1 and 10-2. Like the conveyor belts of the second segment, the belts 16 of the third segment are disposed so close together alongside each other that the leeks can be wedged between the belts. Guide rollers mounted on spring-loaded elements 15 are also provided near the conveyor belts 16-1 and 16-2.

At the transition from the second to the third segment the leeks fall from one segment to the other and in doing so make a bend of virtually 90°. The third segment ensures that the leeks are moved vertically downwards, while the leeks are wedged horizontally between the conveyor belts.

A collection bin 17 is mounted on a conveyor mechanism 18, which moves the bin to and fro (arrows 19 and 20) in the horizontal direction in order to arrange the leeks neatly in the bin and in this way make maximum use of the capacity of the bin. The conveyor mechanism 18 is preferably further provided with means for moving the collection bin 17 up and down in order to keep the falling height of the leeks to a minimum and consequently avoid damage to the leeks. This is particularly advantageous where use is being made of collection bins that are almost 2 metres high. Owing to the fact that the leeks are placed carefully in the collection bin, much less damage will occur and leaf breakage in particular will be largely avoided.

## Claims

1. Leek digger comprising a conveyor element that is provided for conveying the leeks from a digging element, which digging element is provided for lifting the leeks out of the ground, to a collection bin, which conveyor element comprises a first segment for moving the leeks upwards for the purpose of lifting the leeks over a top edge of the collection bin, the leeks in the first segment being disposed substantially in the vertical direction, **characterized in that** the conveyor element comprises a second segment connecting to the first segment and provided in order to rotate the leeks from said vertical direction to a substantially horizontal direction and to move them further in said horizontal direction.

2. Leek digger according to Claim 1, **characterized in that** the conveyor element is provided with a third segment, which connects to the second segment and is provided in order to guide the leeks in a downward movement into the collection bin, while the leeks remain in the horizontal direction.

3. Leek digger according to Claim 1 or 2, **characterized in that** said second segment comprises two conveyor belts disposed next to each other and each mounted on a set of drive elements for driving each of the drive belts, the drive elements of the same set being turned virtually a quarter turn relative to each other.

4. Leek digger according to Claim 3, **characterized in that** guide rollers are disposed between the drive elements of the same set, which guide rollers are spring-mounted and are provided in such a way that they press against the conveyor belt on that part of the section of the conveyor belt on which the leeks are situated.

5. Leek digger according to Claims 1 to 4, **characterized in that** said third segment comprises two further conveyor belts disposed substantially parallel to each other and at right angles to the second segment.

6. Leek digger according to Claims 3 or 5, **characterized in that** the conveyor belts in each case are disposed in such a way that the leeks can be wedged between conveyor belts extending alongside each other.

7. Leek digger according to one of Claims 3 to 6, **characterized in that** the conveyor belts have a substantially T-shaped profile and are provided with a soft covering on the part that comes into contact with the leeks.

8. Leek digger according to one of Claims 1 to 7, **characterized in that** said collection bin is mounted on a conveyor mechanism that is provided in order to move the collection bin to and fro in a horizontal direction.

9. Leek digger according to Claim 8, **characterized in that** said conveyor belt mechanism is further provided with means for moving the collection bin up and down.

10. Leek digger according to one of Claims 1 to 9, **characterized in that** said first segment is provided with a shaking element.
